# EUROPEAN PATENT APPLICATION

(11) **EP 2 316 636 A1**
(43) Date of publication of application: **04.05.2011**
(21) Application number: 10014050.8
(22) Date of filing: 28.10.2010
(51) Int. Cl.: B29C 53/76, B29C 63/24, F17C 1/06

(54) **A method and an apparatus for winding fibers on a pressure vessel having the shape of a cambered disk**

(30) Priority: 30.10.2009 IT VI20090264
(71) Applicant: Industria Meccanica Zane' S.r.l., 36010 Zane' (VI) (IT)
(72) Inventor: Illesi, Matteo, 36042 Breganze (Vincenza) (IT)
(74) Representative: Forattini, Amelia

(57) **Abstract**

A method and an apparatus for winding fibers on a composite overwrapped pressure vessel having the shape of a cambered disk, i.e. having a cylindrical shape with a diameter that is much larger than the height, that is than the thickness. The method comprises the following steps:
- placing a tank (1) on a platform (2) which has supports (21) for a central rotation axis (X-X) of said tank (1);
- assigning a continuous rotary motion to said tank (1) along one direction (Y) about said central rotation axis (X-X);
- assigning an oscillating pendulum-like motion to said platform (2), about a secondary axis (Z), which is perpendicular to said central rotation axis (X-X);
- arranging an eye (4) at a distance from said platform (2) and in a fixed position (P) for guiding and converging one or more filaments (F) or a band or cross-ply of fiber to compose said wrapping, said filaments arriving from one or more fiber supporting spools (R);
- establishing the control and synchronization of said rotary motion of the tank (1) and of said pendulum-like oscillating motion of the platform (2).

## Description

The present invention relates to a method and an apparatus for winding fibers on a composite overwrapped pressure vessel having the shape of a cambered disk, i.e. having a cylindrical shape with a diameter that is much larger than the height.

The invention also relates to the devised apparatus, which allows to achieve the wrapping with cross-ply turns that constitutes the outer cladding.

A composite overwrapped pressure vessel (COPV) is a vessel consisting of a thin, non-structural liner wrapped with a structural fiber composite, designed to hold a fluid under pressure.

Several machines are known for winding the various compositions of fibers, for example glass, Kevlar, carbon, in a cross-ply configuration.

The vessels are generally constituted by cylindrical tanks that normally have diameters that are considerably smaller than their length and comprise two domes at their ends.

There are also some machines that are capable of wrapping tanks, which are cylindrical but have a length that is comparable to the diameter, which are commonly known as drums.

Both for the first types of machine and for the second types cited above, the structure of the machines is very complex, since in order to provide the wrappings with cross-ply fibers a fixed structure is substantially used which includes a rotating spindle on which the tank to be wrapped is placed and one or more fiber supporting spools and a movable eye for the guiding and convergence of the filaments of the wrapping that unwind from the spools arranged on a fixed structure.

The complexity of those machines resides most of all in the plurality of degrees of motion that it is necessary to assign to the movable eye, in order to achieve the desired pattern with helical turns that offers the required resistance to the high internal stresses produced by the fluids under pressure to be introduced in the tanks.

Regardless of the problem of the complexity of the wrapping machines cited above, in any case on the market there are no machines specifically adapted to wrapping a particular type of COPV that has the shape of a cambered disk.

This type of tank is disclosed in EP-A-1996853, to this same Applicant.

The aim of the present invention is to provide a method and an apparatus that allow to wind fibers on a composite overwrapped pressure vessel having the shape of a cambered disk, i.e. having a cylindrical shape with a diameter that is much larger than the height, in a rapid and effective manner.

The above aim and other aims that will be more apparent hereinafter, are achieved by a method for winding fibers on a composite overwrapped pressure vessel, having the shape of a cambered disk, characterized in that it comprises the following steps:
- placing a tank on a platform which has supports for a central rotation axis of said tank;
- assigning a continuous rotary motion to said tank along one direction about said central rotation axis;
- assigning an oscillating pendulum-like motion to said platform, about a secondary axis, which is perpendicular to said central rotation axis;
- arranging an eye at a distance from said platform and in a fixed position for guiding and converging one or more filaments or a band or cross-ply of fiber to compose said wrapping, said filaments arriving from one or more fiber supporting spools;
- establishing the control and synchronization of said rotary motion of the tank and of said pendulum-like oscillating motion of the platform.

The above aim and other aims that will be more apparent hereinafter, are also achieved by an apparatus for winding fibers on a composite overwrapped pressure vessel, having the shape of a cambered disk, characterized in that it comprises a platform, supports resting on said platform; said supports supporting a central axis of rotation of a tank; a first actuation system for actuating said central axis rotation; said platform is supported by a fixed base which is provided with a second actuation system; said second actuation system is adapted to produce a pendulum-like oscillating motion about a secondary axis which is perpendicular to said central axis of rotation.

Further characteristics and advantages of the invention will be more apparent by the following description of an embodiment of the invention, illustrated by way of example in the enclosed drawings, wherein:
Figure 1 is a perspective view of the tank to be wrapped, which is shaped like a cambered disk;
Figures 2 to 6 are top plan views sequentially showing five positions of the tank, supported by the platform, during the wrapping procedure;
Figure 7 is a schematic side view of the apparatus according to the invention;
Figure 8 is a schematic top view of the apparatus according to the invention.

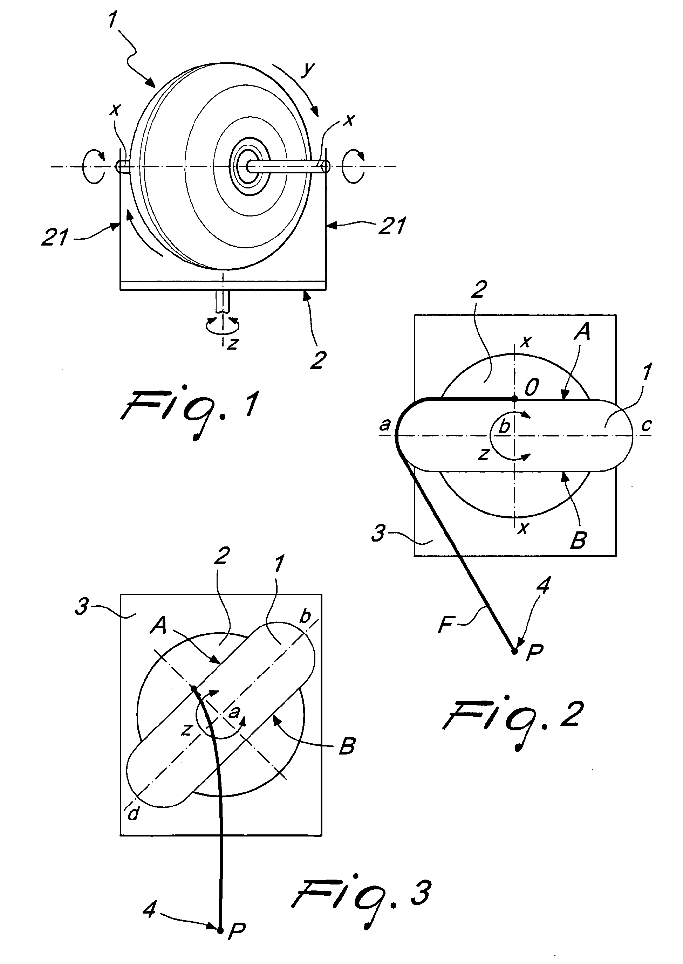

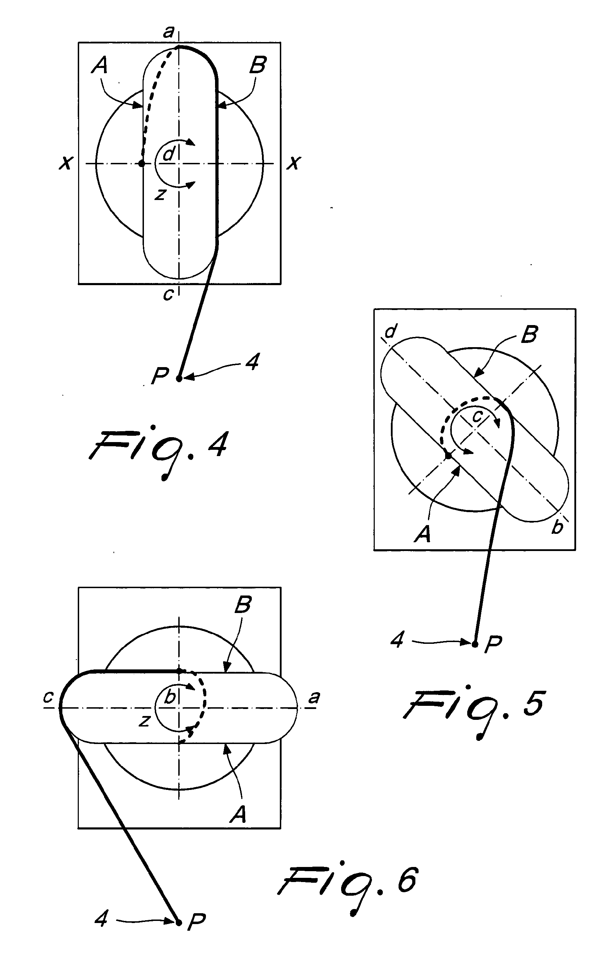

With reference to the above figures, the method according to the invention is designed to wind fibers on a liner or tank 1 in order to provide a composite overwrapped pressure vessel (COPV), according to a fabrication flow schematically illustrated in Figures 2-6.

With reference to Figure 1, the liner or tank 1 is arranged on a platform 2, which is provided with supports 21 for supporting a central axis of rotation X-X of the tank.

A continuous rotary motion, for example along the direction indicated by Y in Figure 1, about the central rotation axis X-X, is assigned to the tank.

A pendulum-like oscillating motion about a secondary axis Z, which is perpendicular to the central rotation axis X-X, is also assigned to the platform 2.

An eye 4 is arranged in a fixed point P at a set distance from the platform 2, as shown in Figures 2-6.

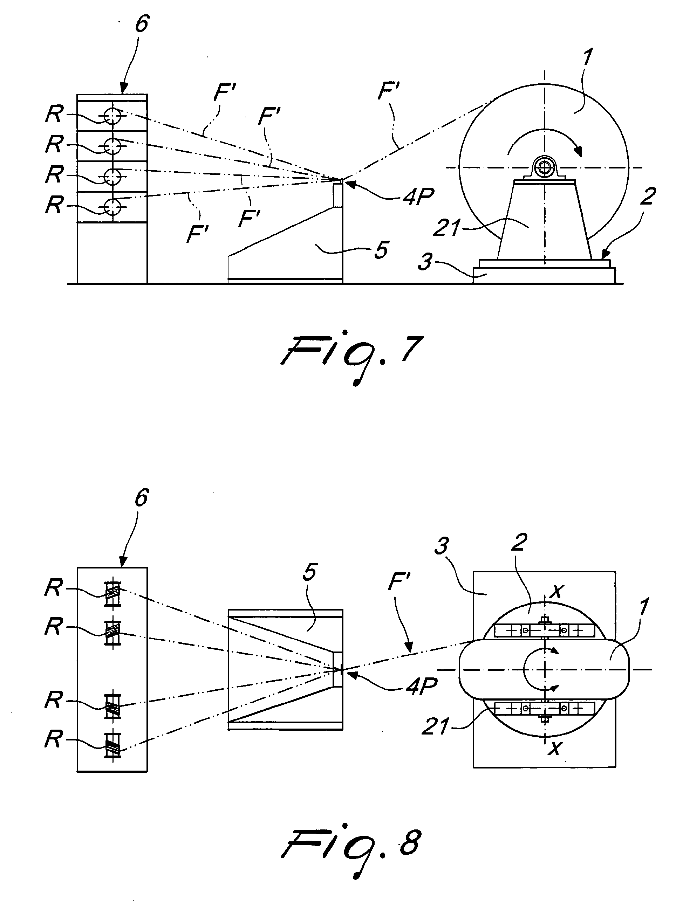

The eye 4 is arranged for the guiding and convergence of the various filaments of fiber or braids that compose the wrapping. The filaments originate from one or more spools R, as shown in Figures 7 and 8.

The control and synchronization of the rotary motion of the tank 1 about the axis X-X and the pendulum-like oscillating motion of the platform 2 about the axis Z is preset by means of a programming software.

The rotary motion of the tank is of a continuous type, along the direction indicated for example by the arrow Y of Figure 1.

The pendulum-like oscillating motion of the platform 2, supported by a fixed base 3 which also supports the tank 1, can conveniently cover the extension of a straight angle, as indicated in Figures 2 to 6.

According to the sequence illustrated in figures 2-6, for example, starting from a beginning point O of the wrapping, with the tank 1 having the rotation axis X-X aligned with the eye in the fixed point P, a filament F that arrives from the eye arranged at P rests on a part of the surface A of the tank 1.

The synchronized and electronically controlled composition of the two movements, the continuous rotary motion of the tank 1 and the pendulum-like oscillating motion of the platform 2, according to the respective axes indicated above, allows to perform the wrapping on both lateral surfaces A and B and on the peripheral curved surface connecting the surfaces A and B. Figures 2 to 6 show the fabrication flow of a first turn of the wrapping as a consequence of a counter-clockwise pendulum motion through approximately 180° of the platform 2.

The subsequent, clockwise, pendulum motion through another 180° of the platform 2 completes one turn of the wrapping.

The sequence of the oscillating motions, exemplified above, combined with the continuous rotation of the tank 1, allows the continuous cross-plying of the turns according to a cladding program that is preset on the programming and control system, according to the requirements.

The apparatus according to the invention, schematically illustrated in Figures 7 and 8, comprises the platform 2, on which the supports 21 rest, for the central rotation axis X-X of the tank 1, and-a first actuation system, not shown in the drawings, for actuating the continuous rotation.

The platform 2 is supported by the fixed base 3, which is provided with a second actuation system that is adapted to produce the pendulum-like oscillating motion about the secondary axis Z, which is perpendicular to the central rotation axis X-X.

The apparatus also comprises the eye 4, which is arranged at the fixed point P, as shown in Figures 2 to 6, and belongs to a support 5, which is arranged in a fixed position at a set distance from the base 3 which supports the platform 2.

The eye 4 also corresponds to the convergence and joining point for the plurality of filaments F, in the case of multiple filaments, that compose the fiber bundle with which the cross-plied turns of the wrapping are provided.

As an alternative to the bundle of filaments, it is also possible to use pre-impregnated bands of fiber.

The apparatus according to the invention also comprises a support structure 6 for a plurality of fiber spools, designated by the reference sign R.

The support structure 6 is arranged upstream of the eye 4 for the guiding and convergence of the filaments F, which are unwound from the spools R, by means of a traction applied by the tank 1.

The use of multiple filaments is non-limiting for the use of pre-impregnated bands or cross-plies.

The fiber of the component filaments should be impregnated, according to per se known methods, by means of adapted resins which also provide adhesion to the surface of the tank and provide the compactness of the wrapping that will assume the function of uniform cladding with the required strength characteristics, as a consequence of polymerization treatments.

Also, strips or cross-plies, that are already pre-impregnated, are commercially available, as anticipated above, and are wrapped as they arrive from the supply.

This application claims the priority of Italian Patent Application No. VI2009A000264, filed on 30 October 2009, the subject matter of which is incorporated herein by reference.

## Claims

1. A method for winding fibers on a composite overwrapped pressure vessel, having the shape of a cambered disk, **characterized in that** it comprises the following steps:
- placing a tank (1) on a platform (2) which has supports (21) for a central rotation axis (X-X) of said tank (1);
- assigning a continuous rotary motion to said tank (1) along one direction (Y) about said central rotation axis (X-X);
- assigning an oscillating pendulum-like motion to said platform (2), about a secondary axis (Z), which is perpendicular to said central rotation axis (X-X);
- arranging an eye (4) at a distance from said platform (2) and in a fixed position (P) for guiding and converging one or more filaments (F) or a band or cross-ply of fiber to compose said wrapping, said filaments arriving from one or more fiber supporting spools (R);
- establishing the control and synchronization of said rotary motion of the tank (1) and of said pendulum-like oscillating motion of the platform (2).

2. An apparatus for winding fibers on a composite overwrapped pressure vessel, having the shape of a cambered disk, **characterized in that** it comprises a platform (2), supports (21) resting on said platform (2); said supports (21) supporting a central axis (X-X) of rotation of a tank (1); a first actuation system for actuating said central axis rotation; said platform (2) is supported by a fixed base (3) which is provided with a second actuation system; said second actuation system is adapted to produce a pendulum-like oscillating motion about a secondary axis (Z) which is perpendicular to said central axis of rotation (X-X).

3. The apparatus according to claim 2, **characterized in that** said eye (4) is supported by a support (5) arranged in a fixed position (P) at a distance from said fixed base (3) which supports said platform (2).

4. The apparatus according to claim 2 or 3, **characterized in that** it comprises a supporting structure (6) for one or more fiber supporting spools (R); said spool supporting structure (6) is arranged upstream of said eye (4) for guiding the filaments (F), which are unwound from said spools by the traction applied by the movement of said tank (1).

5. The apparatus according to one or more of claims 2-4, **characterized in that** said wrapping is constituted by cross-plies, strips or bands of fiber which are pre-impregnated.
